# EUROPEAN PATENT SPECIFICATION

(11) **EP 3 735 335 B1**
(45) Date of publication and mention of the grant of the patent: **26.07.2023**
(21) Application number: 19702119.9
(22) Date of filing: 02.01.2019
(51) Int. Cl.: B23Q 3/06, B25B 1/00, B23Q 17/00, F15B 15/28

(54) **WORKPIECE HOLDER FOR MACHINE TOOLS AND MACHINING CENTERS, PROVIDED WITH A SYSTEM FOR DETECTING THE POSITION OF THE CLAWS**
WERKSTÜCKHALTER FÜR WERKZEUGMASCHINEN UND BEARBEITUNGSZENTREN MIT EINEM SYSTEM ZUR ERFASSUNG DER POSITION DER KLAUEN
PORTE-PIÈCE POUR MACHINES-OUTILS ET CENTRES D'USINAGE, POURVU D'UN SYSTÈME DE DÉTECTION DE LA POSITION DES GRIFFES

(30) Priority: 04.01.2018 IT 201800000538
(43) Date of publication of application: 11.11.2020
(73) Proprietor: Bronzino, Pier Mauro, 10040 Caprie (IT); Bronzino, Walter, 10055 Condove (IT)
(72) Inventor: Bronzino, Pier Mauro, 10040 Caprie (IT); Bronzino, Walter, 10055 Condove (IT)
(74) Representative: Modiano, Micaela Nadia
(86) International application number: PCT/IB2019/050020
(87) International publication number: WO 2019/135172

(56) References cited:
- EP-A1- 2 929 980
- EP-A1- 2 940 316
- EP-A1- 2 949 950
- US-A1- 2014 138 890

## Description

The present invention relates to a workpiece holder for machine tools and machining centers, provided with a system for detecting the position of the claws.

As is known, a workpiece to be machined in a generic machining center can be mounted on a workpiece holder provided with one or more claws which open/close automatically, typically under pneumatic or hydraulic control.

The workpiece holder can be provided with sensor means adapted to detect that the two stroke limit positions (fully open or fully closed) of the claws have been reached.

This information is of interest since the fully open position enables the loading of the workpiece, whereas the fully closed position indicates an anomaly (workpiece not present): in grip conditions, the claws must instead be in a position that is intermediate between the two stroke limit positions.

Two proximity sensors are currently used which are arranged so as to detect respective magnetic locators fixed to one of the claws when said claw is in the two stroke limit positions.

One drawback of this system is that the proximity sensors must be supplied with electric power and this circumstance introduces considerable design and manufacturing complexities, especially when the workpiece holder is supported rotatably during working.

Another similar workpiece holder is known from US2014/0138890 A1, on which the preamble of claim 1 is based.

Therefore, the aim of the present invention is to provide a workpiece holder for machine tools and machining centers which is provided with a system for detecting the position of the claws that is reliable and precise and can be easily implemented on any application without requiring an electric power supply.

This aim, as well as these and other objects which will become better apparent from the continuation of the description, are achieved by a workpiece holder having the characteristics described in claim 1, while the dependent claims define other advantageous albeit secondary characteristics of the invention.

The invention is now described in greater detail with reference to some preferred but not exclusive embodiments thereof, illustrated by way of nonlimiting example in the accompanying drawings, wherein:
Figure 1 is a perspective view of a workpiece holder according to the invention;
Figure 2 is a front elevation view of the workpiece holder of Figure 1;
Figure 3 is a sectional view of Figure 2, taken along the line III-III;
Figure 4 is a sectional view of Figure 3, taken along the line IV-IV;
Figure 5 is a view, similar to Figure 4, showing the workpiece holder in a different operating configuration;
Figure 6 is a sectional view of Figure 3, taken along the line VI-VI;
Figure 7 is a view, similar to Figure 6, showing the workpiece holder in a different operating configuration;
Figure 8 is an enlarged-scale view of a detail of Figure 6;
Figures 9a, 9b are two views similar to Figure 3, which show the workpiece holder according to an alternative embodiment of the invention in respective two different operating positions;
Figures 10 and 11 are two sectional views of Figures 9a, 9b, taken along the axes X-X and XI-XI;
Figure 12 is an enlarged-scale view of a detail of Figure 9a;
Figure 13 is a sectional view of Figure 12, taken along the line XIII-XIII;
Figure 14 is a perspective view of a workpiece holder according to a further alternative embodiment of the invention;
Figure 15 is a sectional view, similar to Figure 3, which refers to the alternative embodiment of Figure 14;
Figures 16 is a sectional view of Figure 15, taken along the line XVI-XVI;
Figure 17 is a view, similar to Figure 16, showing the workpiece holder in a different operating configuration;
Figure 18 is a sectional view of Figure 15, taken along the axis XVIII-XVIII.

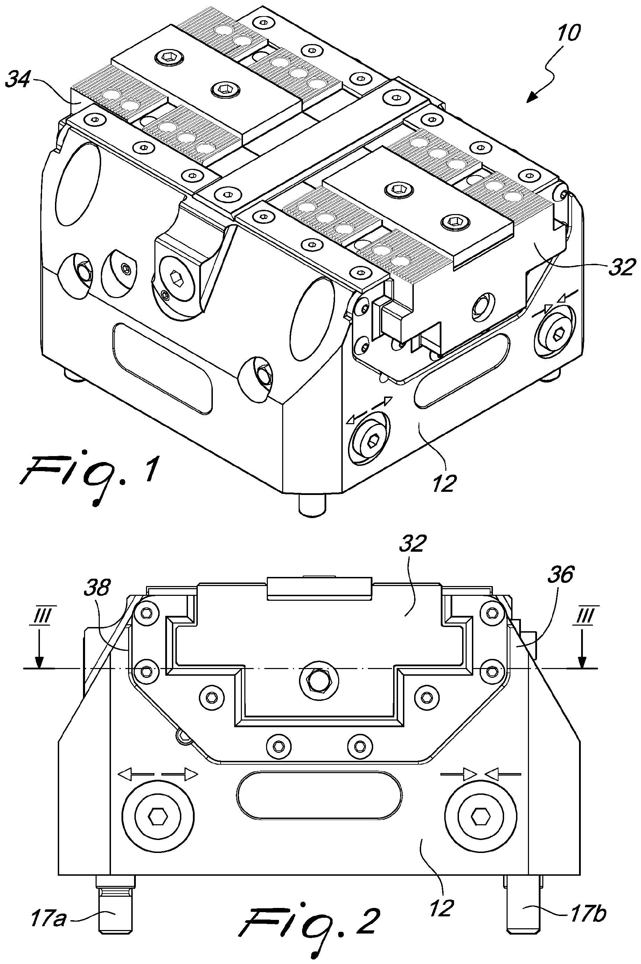

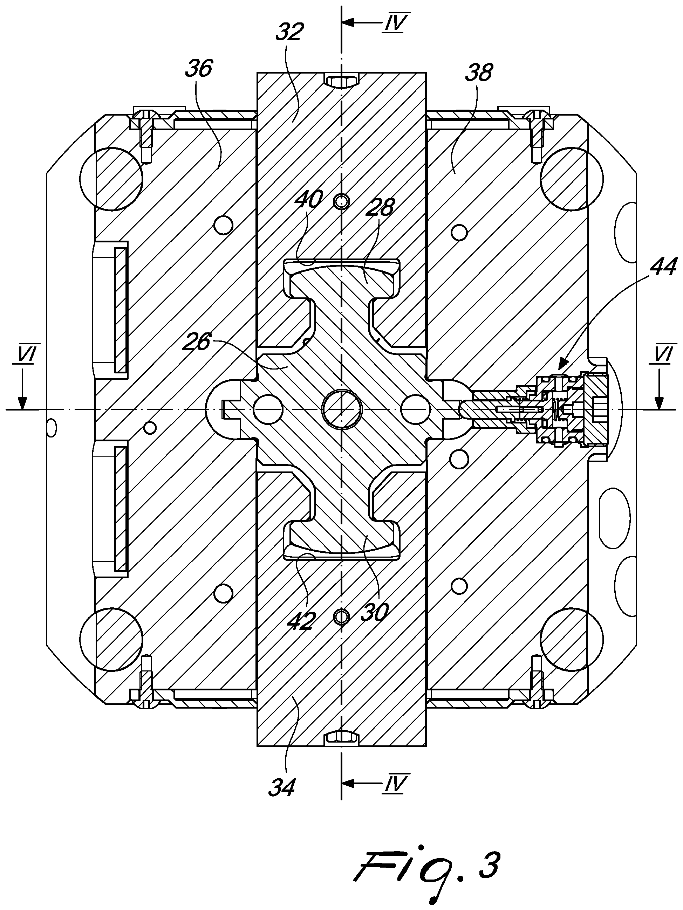

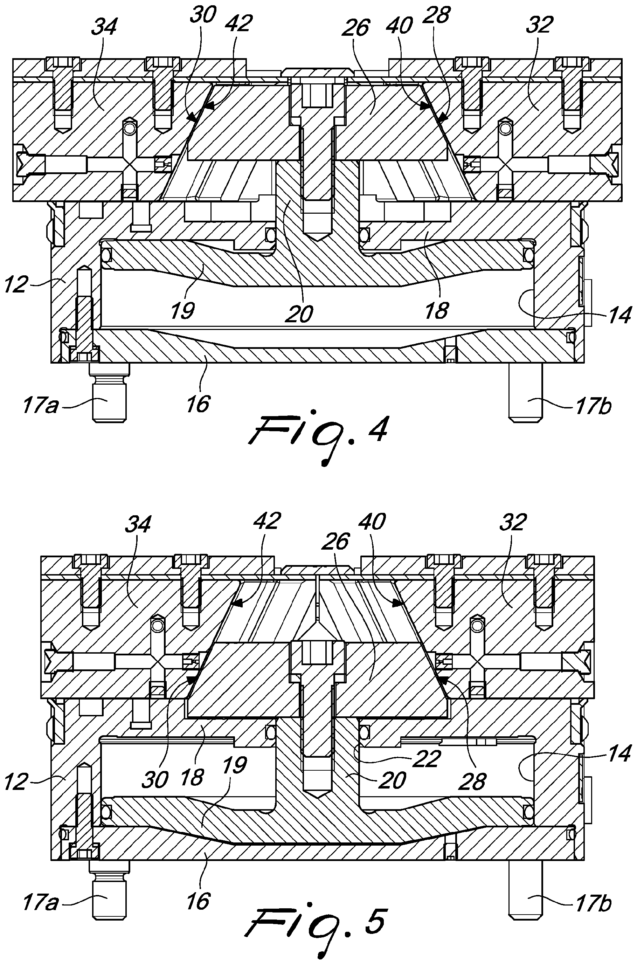

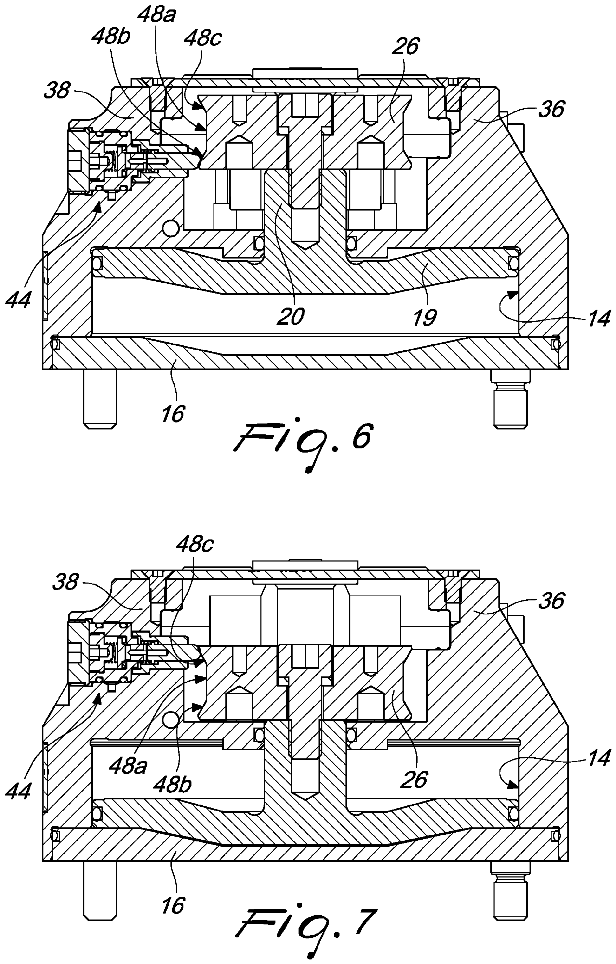

With initial reference to Figures 1-7, a workpiece holder 10 for machine tools and machining centers comprises a body 12 in which a pneumatically sealed cylindrical chamber 14 is formed (Figures 4-7).

One end of the cylindrical chamber 14 is closed by a bottom plate 16. The base of the body 12 also forms the base for the anchoring of the workpiece holder 10 and for this purpose is provided with centering/fixing pins 17a, 17b.

The opposite end of the cylindrical chamber 14 is delimited by a back wall 18 provided monolithically from the body 12.

The cylindrical chamber 14 slidingly accommodates a piston 19. The piston 19 is provided with a stem 20 which slidingly passes, with a pneumatically hermetic seal, through a hole 22 provided in the back wall 18. A transmission element is fixed at the top of the stem 20, externally to the cylindrical chamber 14, and is constituted by a sleeve 26 which has two mirror-symmetrical oblique guides 28, 30 on respective opposite sides, which converge away from the piston 19.

The workpiece holder 10, in this embodiment, is provided with two claws 32, 34 on which it is possible to fix respective grip elements (not shown) which are contoured as a function of the part to be gripped.

The two claws 32, 34 are supported so that they can translate at right angles to the axis of the piston 19 between two rectilinear guides 36, 38 obtained monolithically from the body 12.

The claws 32, 34 have respective oblique contrast guides 40, 42 which engage slidingly the two oblique guides 28, 30 of the sleeve 26, thus producing the opening and closing of the claws 32, 34 in relation to the axial movements of the piston 19.

The workpiece holder 10 is provided with sensor means adapted to detect the reaching of the stroke limit positions by the claws 32, 34.

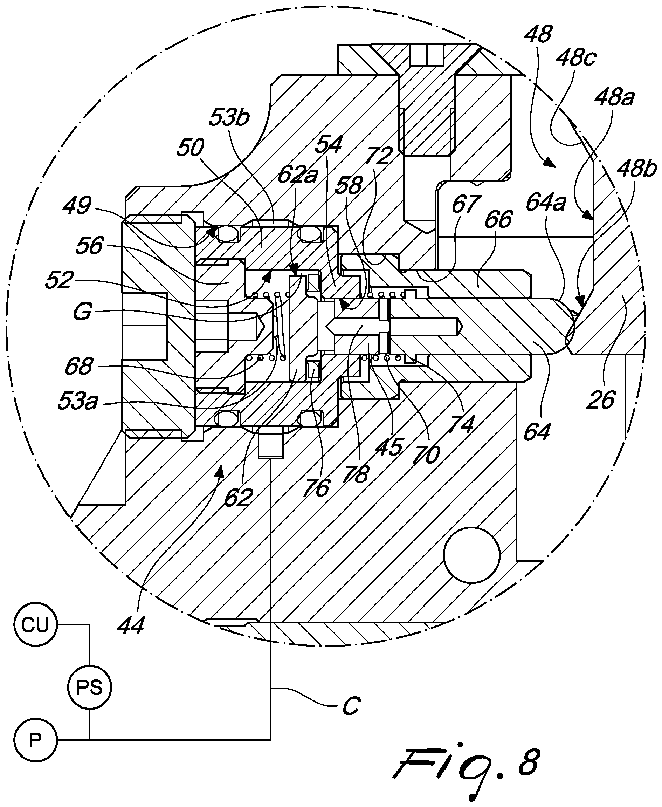

The sensor means according to the invention comprise a pneumatic valve 44, which affects a circuit C of pressurized air that is provided in the body 12 and is connected to a pump P (shown only schematically in Figure 8) and is provided with a flow control element 45 which can move between a closed position and a venting position of the circuit C under the control of a contoured surface 48 which can move in correlation with the movement of the claws 32, 34 and actuates for opening/closing the flow control element 45 by cam action; in particular, the contoured surface 48 has such a profile as to determine the switching between the closed position and the venting position when the claws 32, 34 reach the stroke limit positions.

In this embodiment, the contoured surface 48 is provided on the sleeve 26 and has a rectilinear central portion 48a which is parallel to the axis of the piston 19, delimited between two mutually opposite slopes 48b, 48c which are mutually mirror-symmetrical.

With particular reference to Figure 8, the pneumatic valve 44 is accommodated in a valve seat 49 provided on the body 12.

The pneumatic valve 44 comprises a valve body 50 in which there is a cylindrical seat 52 which is delimited axially between a base 54 obtained monolithically from the valve body 50 and a lid 56.

The cylindrical seat 52 is in fluid connection, by means of an opening 53a, with an annular groove 53b which surrounds the valve body 50 and is connected to the circuit C.

The base 54 is provided with a hole 58 in which the flow control element 45 is inserted slidingly.

The flow control element 45, which has the shape of a piston, has an end that extends into a plate 62 which slidingly engages the cylindrical seat 52.

The opposite end of the flow control element 45 acts coaxially on a finger-shaped slider 64. The slider 64 is inserted slidingly in a bushing 66 accommodated in a hole 67 that passes through the body 12 at right angles to the axis of the piston 19. The slider 64 engages the contoured surface 48 with a contact end 64a thereof which has a hemispherical profile and is opposite with respect to the end on which the piston 45 acts.

The piston 45 and the slider 64 are pushed elastically toward the contoured surface 48 by primary elastic means. The primary elastic means comprise a first compression spring 68 which is accommodated coaxially in the cylindrical seat 52 between the plate 62 and the bottom plate 56.

The slider 64 is pushed further toward the contoured surface 48 by auxiliary elastic means. The auxiliary elastic means comprise a second compression spring 70 accommodated in a spring seat 72 of the bushing 66, between the valve body 50 and an annular protrusion 74 of the slider 64.

The plate 62 is provided with a flat region 62a which forms an interspace G with respect to the cylindrical seat 52.

Hermetic sealing means constituted by an annular gasket 76 are interposed between the plate 62 and the base 54.

Inside the piston 45 there is a channel 78 which has a first end that leads into the spring seat 72, which is in fluid communication with the atmosphere, and the opposite end that leads into the cylindrical seat 52 upstream of the annular gasket 76.

In this manner, with the plate 62 in abutment against the annular gasket 76, the cylindrical seat 52 is sealed hermetically. With the plate 62 detached from the annular gasket 76, the cylindrical seat 52 is connected to the atmosphere by means of the air passage formed by the interspace G, by the channel 78, and by the spring seat 72.

In operation, when the claws 32, 34 and the sleeve 26 are in an intermediate position, the slider 64 faces the rectilinear central portion 48a of the contoured surface 48 without contact. The plate 62 is pushed into abutment against the annular gasket 76 by the first compression spring 68 and the cylindrical chamber 52 is therefore pressurized.

With the claws 32, 34 in a fully open or fully closed position, the slider 64 retracts, by cam engagement with the slopes 48b or 48c of the contoured surface 48, and pushes the plate 62 away from the annular gasket 76, connecting the seat 52 to the atmosphere by means of said air passage.

At this point, a pressure sensor PS (shown only schematically in Figure 8) detects a pressure drop and reports it to the control unit CU of the machining center (also shown only schematically in Figure 8). The control unit CU, depending on the open or closed configuration of the claws 32, 34, processes the signal as enabling the loading of the workpiece or as indicating an anomaly.

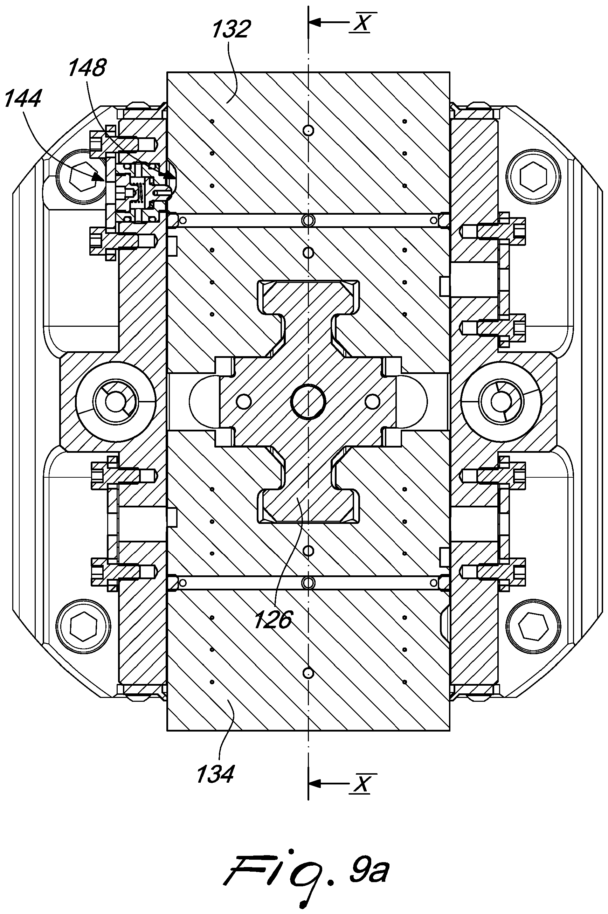

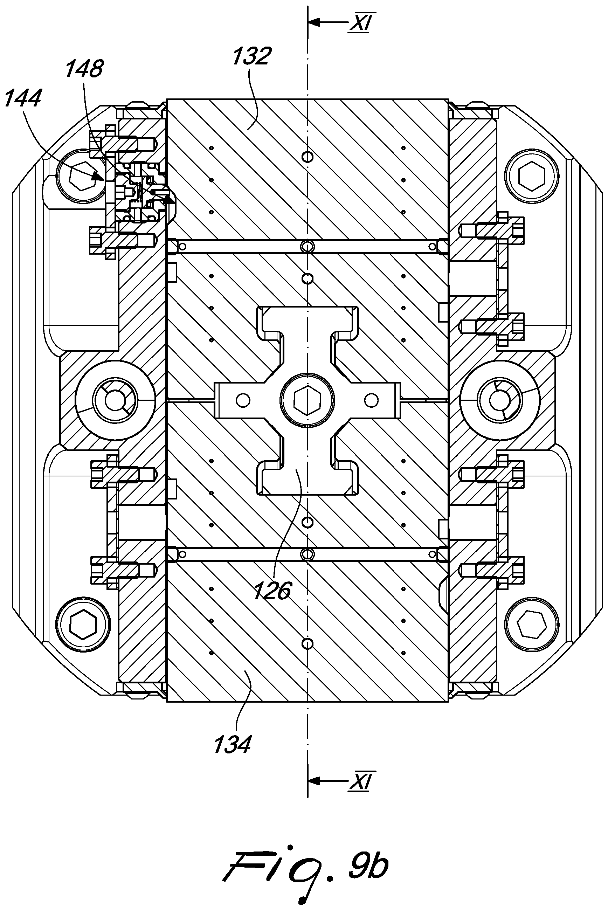

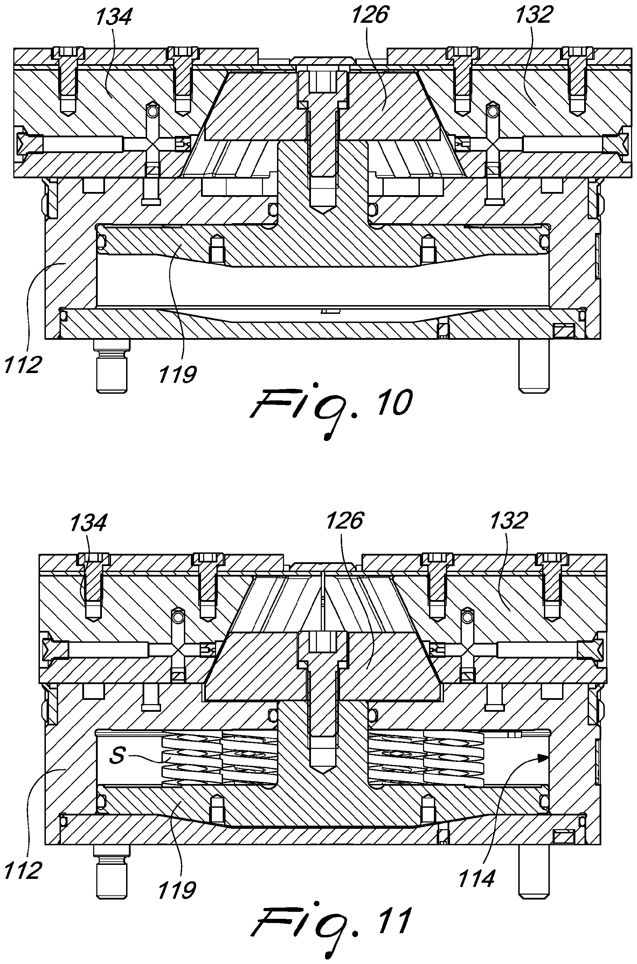

Figures 9-13 describe an alternative embodiment of the invention, in which the elements that are similar to the preceding embodiment are identified by the same reference numeral increased by 100. The description shall not be repeated for the elements that are similar to the preceding embodiment.

In this embodiment, the piston 119 is pushed downward both pneumatically and elastically by means of a series of springs S which are accommodated in the pneumatic chamber 114 between the bottom plate 116 and the back wall 118.

The space occupation of the springs 119 does not allow to position the pneumatic valve 144 so as to interact with the sleeve 126. Therefore, in this embodiment, the pneumatic valve 144 interacts directly with one of the claws 132, 134 on which the contoured surface 148 is provided.

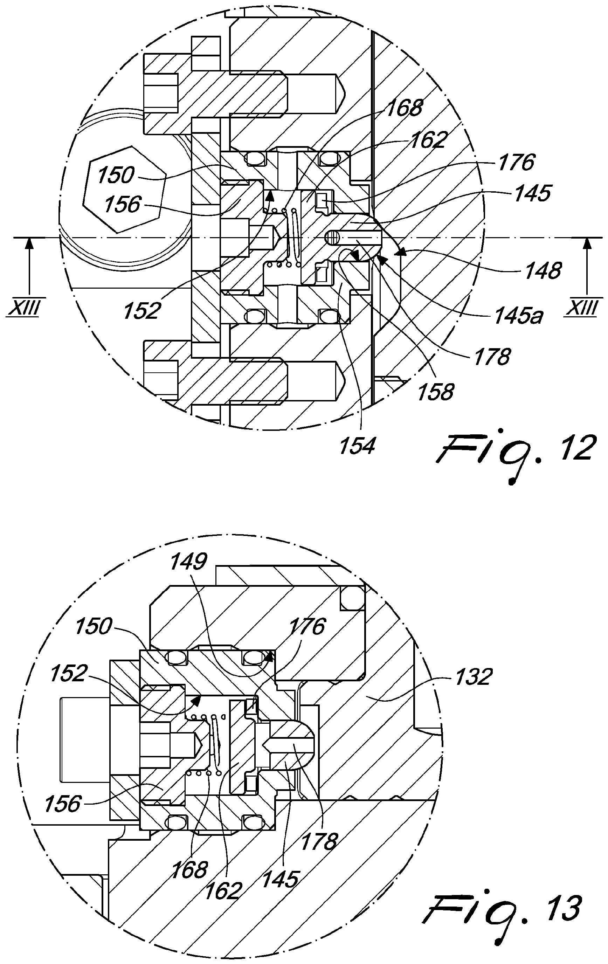

With particular reference to Figures 12 and 13, the pneumatic valve 144 is again accommodated in a valve seat 149 provided in the body 112 and comprises a valve body 150 which has an axially symmetrical profile, in which there is a cylindrical seat 152 delimited between a base 154 and a bottom plate 156. The back wall 154 is provided with a hole 158 in which a piston 145 is inserted slidingly.

The end of the piston 145 that faces the cylindrical seat 152 is extended with a plate 162 which engages slidingly the cylindrical seat 152.

The opposite end of the piston 145, or contact end 145a, has a hemispherical profile and engages the contoured surface 148 directly. In this case, therefore, there is no intermediate slider.

The piston 158 is pushed elastically toward the contoured surface 148 by a compression spring 168 which is accommodated coaxially in the cylindrical seat 152 between the plate 162 and the bottom plate 156.

A sealing gasket 176 is interposed between the plate 162 and the base 154.

Like the previous embodiment, inside the piston 145 there is a channel 178 which extends from the contact end 145, which is in fluid connection to the atmosphere, to the cylindrical seat 156 upstream of the annular gasket 176.

According to an important characteristic of this embodiment, which is clearly visible in Figure 13, the cylindrical seat 152 is slightly eccentric with respect to the valve body 150. This allows to adjust finely the stroke of the piston by rotating the valve body 150 about its own axis.

This possibility of fine adjustment is particularly advantageous in this embodiment, since the stroke of the claws 132, 134 is much shorter than the stroke of the sleeve 126 owing to the force multiplication ratio between them.

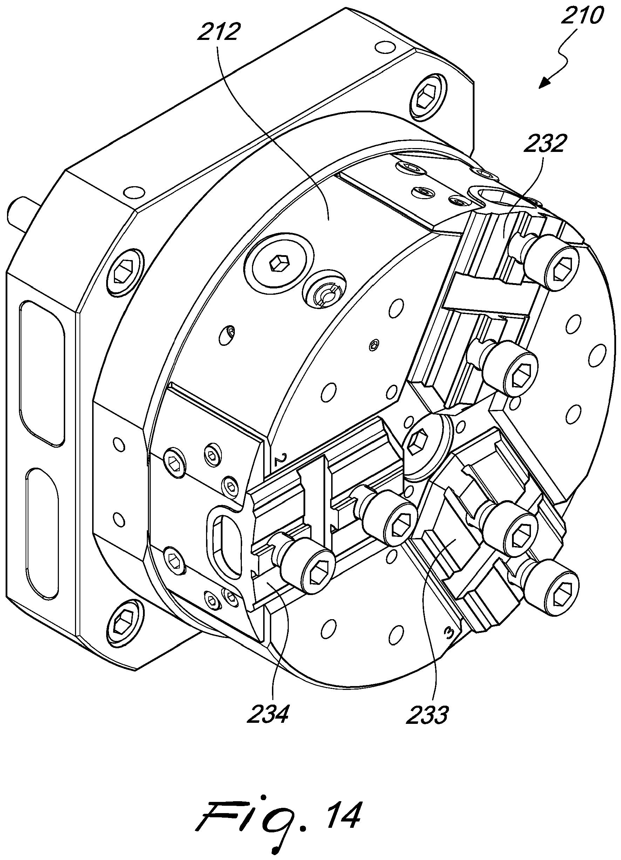

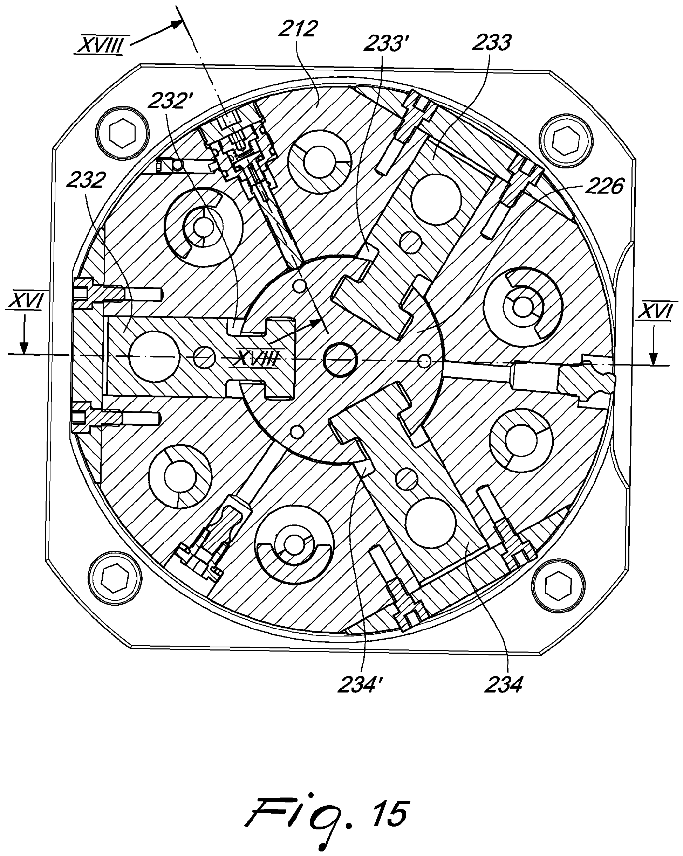

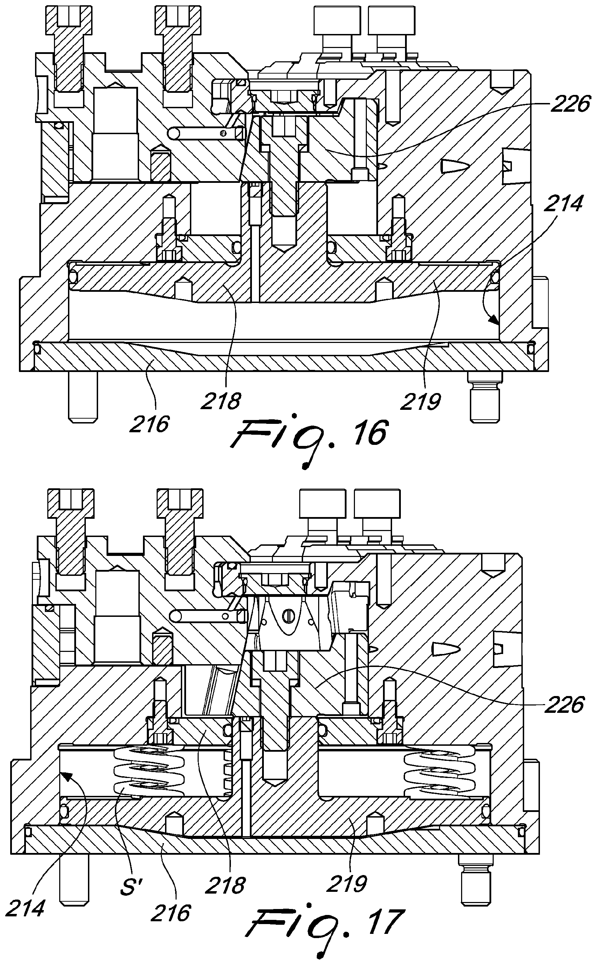

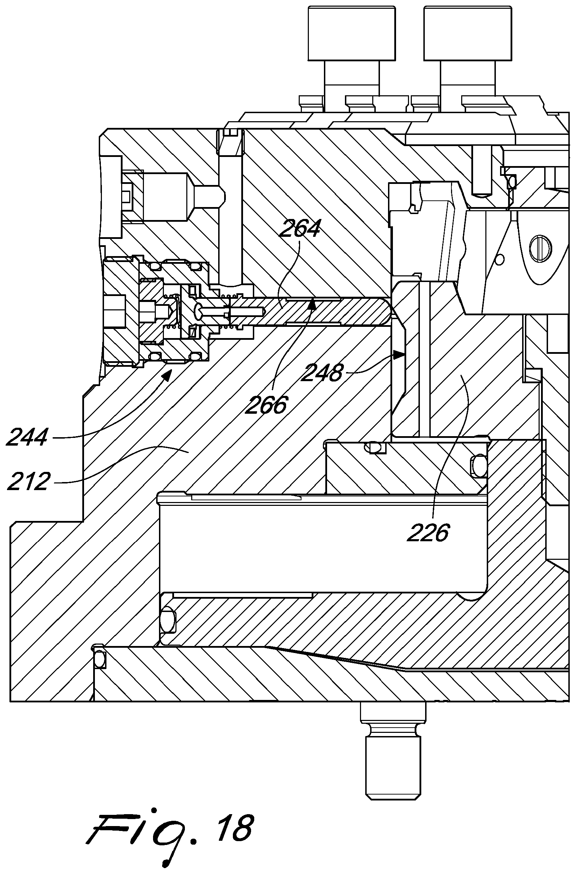

Figures 14-18 describe a further alternative embodiment of the invention, in which the elements similar to the first embodiment are identified by the same reference increased by 200.

In this embodiment, the workpiece holder 210 is provided with three claws 232, 233, 234 which are received slidingly in respective guiding seats 232', 233', 234' provided in the body 212 of the device. In a manner similar to the preceding embodiments, the claws 232, 233, 234 open and close in relation to the axial translation of a sleeve 226, which is actuated by a piston 219 accommodated in a pneumatic chamber 214 formed in the body 212.

In this embodiment also, as in the directly preceding one, the piston 219 is pushed downward both pneumatically and elastically by means of a series of springs S' accommodated in the pneumatic chamber 214 between a bottom plate 216 and a back wall 218.

In a manner similar to the first embodiment, the contoured surface 248 is provided on the sleeve and the piston 245 does not engage the contoured surface 248 directly but by means of a slider 264. The slider 264 is inserted slidingly in a hole 266 provided in the body 212. The pneumatic valve 244 is fully similar to the one described with reference to the first embodiment and therefore its description will not be repeated.

In practice it has been found that according to the intended aim and objects the workpiece holder according to the invention fully achieves the intended aim and objects. In particular, the pneumatic system described above for detecting the position of the claws is reliable and precise and can be implemented easily on any application since it does not require an electric power supply.

Some preferred embodiments of the invention have been described herein, but of course the person skilled in the art may apply various modifications and variations within the scope of the claims.

In particular, the cam system for transmitting the motion from the sleeve or from the claws to the flow control element may be replaced with other known transmission means, for example kinematic systems using levers and linkages, and the like.

Likewise, although in the embodiment described herein the claws open/close with a translational motion, the same principles are applicable to the case in which the claws have an oscillating opening/closure movement, with mere constructive refinements that will be obvious to the person skilled in the art.

Furthermore, although the possibility to finely adjust the stroke of the piston that is achieved by providing its sliding seat so that it is eccentric with respect to the valve body is particularly advantageous if the contoured surface is provided on the claws, the same principle can of course be applied to the case in which the contoured surface is provided on the sleeve.

Moreover, the constructive embodiment of the pneumatic valve 44 can be changed easily, and in particular the flow control element can have different configurations as might be devised by the person skilled in the art. For example, instead of consisting of a sliding piston, the flow control element might be constituted by a flexible membrane arranged so as to open/close a passage for air toward the atmosphere under the control of cam transmission means such as the ones described, or others which are within the scope of the same inventive concept.

The detection system according to the invention is of course likewise applicable both to the case in which grip on the workpiece is performed from the outside inward, as in the examples described herein, and to the opposite case, in which grip on the workplace is performed from the outside inward.

The invention is of course applicable independently of the claw actuation system, which, particularly in the field of fluid dynamics, can be pneumatic, as in the examples described above, or hydraulic.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A workpiece holder for machining centers, comprising
a body (12),
at least one claw (32, 34) which can move with respect to the body (12) between two stroke limit positions under the control of actuation means (19),
sensor means adapted to detect the stroke limit positioning of the claw (32, 34),
wherein said sensor means comprise a pneumatic valve (44) which controls a pressurized air circuit (C) provided in the body (12) and equipped with a flow control element (45) which can move between a closure position and a venting position of said circuit (C) under the control of transmission means operatively connected to the claw (32, 34), **characterised in that** said transmission means are adapted to cause the switching from said closure position to said venting position when said claw (32, 34) reaches said stroke limit positions, and **in that** said flow control element (45) is biased toward said closure position by primary elastic means (68).

2. The workpiece holder according to claim 1, **characterized in that** said transmission means comprise a contoured surface (48) that can move in correlation with the movement of said claw (32, 34) and is adapted to actuate said flow control element (45) for opening/closing by cam action.

3. The workpiece holder according to claim 1 or 2, **characterized in that** said pneumatic valve (44) comprises a valve body (50) having a seat (52) defined therein which is in fluid communication with said circuit (C), said flow control element (45) being supported slidingly within said valve body (50) and having a channel (78) which has a first end in fluid communication with the atmosphere and a second end arranged so as to communicate with the seat (52) with the flow control element (45) in its venting position, and to be isolated from the seat (50) with the flow control element (45) in its closure position.

4. The workpiece holder according to claim 3, **characterized in that** said flow control element (45) integrally supports a plate (62) which is accommodated slidingly within said cylindrical seat (52) and is adapted to abut, with said flow control element (45) in its closure position, against a base (54) of said seat (52) via hermetic sealing means (76), said second end leading upstream of said hermetic sealing means (76) with respect to the seat (52).

5. The workpiece holder according to claim 64, **characterized in that** said primary elastic means comprise a primary compression spring (68) accommodated in said valve body (50).

6. The workpiece holder according to one of claims 2-5, **characterized in that** said transmission means comprise a slider (64) which is operatively interposed between said flow control element (45) and said contoured surface (48).

7. The workpiece holder according to claim 6, **characterized in that** said slider (64) is biased toward said contoured surface (48) by auxiliary elastic means (70).

8. The workpiece holder according to one of claims 1-5, **characterized in that** said flow control element (145) engages directly said cam surface (148) with an operating end thereof (145a).

9. The workpiece holder according to one of claims 1-48, **characterized in that** it comprises a transmission element (26) which is interposed operatively between said claw (32, 34) and said actuation means (19), **characterized in that** said contoured surface (48) is provided on said transmission element (26).

10. The workpiece holder according to claim 9, **characterized in that** said transmission element consists of a sleeve (26) which is supported so that it can translate by the body (12), and said contoured surface (48) has a profile elongated in the direction of translation of the sleeve (26).

11. The workpiece holder according to one of claims 1-8, **characterized in that** said contoured surface (148) is provided on said claw (132) and has a profile elongated in the direction of translation of the claw (132).

12. The workpiece holder according to claim 10 or 11, **characterized in that** said contoured surface (48, 148) has a rectilinear central portion (48a, 148a) that is delimited between two mutually opposite slopes (48b, 48c, 148b, 148c).

13. The workpiece holder according to one of claims 1-12, **characterized in that** said actuation means (19) comprise a fluid dynamic actuator.

14. The workpiece holder according to one of claims 3 or 13, **characterized in that** said valve body (150) has an axially symmetrical profile and said flow control element (152) is supported in an eccentric position with respect to said valve body (150) for a fine adjustment of its stroke in relation to the angular position of the valve body (150) about its own axis.

## Patentansprüche

1. Ein Werkstückhalter für Bearbeitungszentren, der Folgendes umfasst:
einen Körper (12),
mindestens eine Klaue (32, 34), die sich unter der Kontrolle von Antriebsmitteln (19) im Verhältnis zum Körper (12) zwischen zwei Hubbegrenzungspositionen bewegen kann,
Sensormittel, ausgebildet, um die Hubbegrenzungspositionierung der Klaue (32, 34) zu erfassen;
wobei die Sensormittel ein Druckluftventil (44) umfassen, das einen Druckluftkreislauf (C) steuert, der im Körper (12) untergebracht und mit einem Durchflussregelelement (45) ausgestattet ist, welches sich unter der Kontrolle von Übertragungsmitteln, die operativ mit der Klaue (32, 34) verbunden sind, zwischen einer Verschlussposition und einer Lüftungsposition des Kreislaufs (C) bewegen kann,
**dadurch gekennzeichnet, dass** die Übertragungsmittel ausgebildet sind, um das Schalten von der Verschlussposition in die Lüftungsposition zu veranlassen, wenn die Klaue (32, 34) die Hubbegrenzungspositionen erreicht, und dadurch, dass das Durchflussregelelement (45) von ersten elastischen Mitteln (68) zu der Verschlussposition hin vorgespannt ist.

2. Der Werkstückhalter gemäß Anspruch 1, **dadurch gekennzeichnet, dass** die Übertragungsmittel eine konturierte Oberfläche (48) umfassen, die sich in Korrelation zur Bewegung der Klaue (32, 34) bewegen kann und ausgebildet ist, um das Durchflussregelelement (45) durch Nockenwirkung zum Öffnen/Schließen zu bewegen.

3. Der Werkstückhalter gemäß Anspruch 1 oder 2, **dadurch gekennzeichnet, dass** das Druckluftventil (44) einen Ventilkörper (50) umfasst, in dem ein Sitz (52) bestimmt ist, welcher in Fluidaustausch mit dem Kreislauf (C) steht, wobei das Durchflussregelelement (45) verschiebbar in dem Ventilkörper (50) gelagert ist und einen Kanal (78) hat, der ein erstes Ende in Fluidaustausch mit der Atmosphäre und ein zweites Ende hat, das angeordnet ist, um mit dem Sitz (52) zu kommunizieren, wenn sich das Durchflussregelelement (45) in seiner Lüftungsposition befindet, und um vom Sitz (50) getrennt zu sein, wenn das Durchflussregelelement (45) in seiner Verschlussposition ist.

4. Der Werkstückhalter gemäß Anspruch 3, **dadurch gekennzeichnet, dass** das Durchflussregelelement (45) integral eine Platte (62) trägt, die verschiebbar in den zylindrischen Sitz (52) aufgenommen und ausgebildet ist, um, wenn das Durchflussregelelement (45) sich in seiner Verschlussposition befindet, über hermetische Abdichtmittel (76) an einer Basis (54) des Sitzes (52) anzuliegen, wobei das zweite Ende im Verhältnis zu dem Sitz (52) stromaufwärts von den hermetischen Abdichtmitteln (76) führt.

5. Der Werkstückhalter gemäß Anspruch 4, **dadurch gekennzeichnet, dass** die ersten elastischen Mittel eine erste Druckfeder (68) umfassen, die in dem Ventilkörper (50) untergebracht ist.

6. Der Werkstückhalter gemäß einem der Ansprüche 2-5, **dadurch gekennzeichnet, dass** die Übertragungsmittel einen Schieber (64) umfassen, welcher operativ zwischen dem Durchflussregelelement (45) und der konturierten Oberfläche (48) angeordnet ist.

7. Der Werkstückhalter gemäß Anspruch 6, **dadurch gekennzeichnet, dass** der Schieber (64) von zusätzlichen elastischen Mitteln (70) zu der konturierten Oberfläche (48) hin vorgespannt ist.

8. Der Werkstückhalter gemäß einem der Ansprüche 1-5, **dadurch gekennzeichnet, dass** das Durchflussregelelement (145) mit einem Arbeitsende desselben (145a) direkt mit der Nockenoberfläche (148) in Eingriff steht.

9. Der Werkstückhalter gemäß einem der Ansprüche 1-8, **dadurch gekennzeichnet, dass** er ein Übertragungselement (26) umfasst, welches operativ zwischen der Klaue (32, 34) und den Antriebsmitteln (19) angeordnet ist; **dadurch gekennzeichnet, dass** die konturierte Oberfläche (48) an dem Übertragungselement (26) angebracht ist.

10. Der Werkstückhalter gemäß Anspruch 9, **dadurch gekennzeichnet, dass** das Übertragungselement aus einer Hülse (26) besteht, die durch den Körper (12) so gelagert ist, dass sie Translationsbewegungen durchführen kann, und die konturierte Oberfläche (48) ein Profil hat, das in die Translationsrichtung der Hülse (26) verlängert ist.

11. Der Werkstückhalter gemäß einem der Ansprüche 1-8, **dadurch gekennzeichnet, dass** die konturierte Oberfläche (148) an der Klaue (132) angebracht ist und ein Profil hat, das in die Translationsrichtung der Klaue (132) verlängert ist.

12. Der Werkstückhalter gemäß Anspruch 10 oder 11, **dadurch gekennzeichnet, dass** die konturierte Oberfläche (48, 148) einen geradlinigen zentralen Abschnitt (48a, 148a) hat, der durch zwei einander gegenüberliegende Schrägen (48b, 48c, 148b, 148c) begrenzt ist.

13. Der Werkstückhalter gemäß einem der Ansprüche 1-12, **dadurch gekennzeichnet, dass** die Antriebsmittel (19) einen Fluiddynamikantrieb umfassen.

14. Der Werkstückhalter gemäß einem der Ansprüche 3 oder 13, **dadurch gekennzeichnet, dass** der Ventilkörper (150) ein axialsymmetrisches Profil hat und das Durchflussregelelement (152) in einer exzentrischen Position im Verhältnis zu dem Ventilkörper (150) gelagert ist, zum Zwecke einer Feineinstellung seines Hubs mit Bezug auf die Winkelposition des Ventilkörpers (150) um seine eigene Achse.

## Revendications

1. Porte-pièce pour centres d'usinage, comportant :
un corps (12),
au moins une griffe (32, 34) qui peut se déplacer par rapport au corps (12) entre deux positions de limite de course sous la commande de moyens d'actionnement (19),
des moyens capteurs adaptés pour détecter le positionnement de limite de course de la griffe (32, 34),
dans lequel lesdits moyens capteurs comportent une soupape pneumatique (44) qui commande un circuit d'air mis sous pression (C) agencé dans le corps (12) et équipé d'un élément de commande d'écoulement (45) qui peut se déplacer entre une position de fermeture et une position d'évent dudit circuit (C) sous la commande de moyens de transmission reliés à la griffe (32, 34) de manière opérationnelle,
**caractérisé en ce que** lesdits moyens de transmission sont adaptés pour entraîner le basculement de ladite position de fermeture à ladite position d'évent lorsque ladite griffe (32, 34) atteint lesdites positions de limite de course, et **en ce que** ledit élément de commande d'écoulement (45) est rappelé vers ladite position de fermeture par des moyens élastiques primaires (68).

2. Porte-pièce selon la revendication 1, **caractérisé en ce que** lesdits moyens de transmission comportent une surface profilée (48) qui peut se déplacer en corrélation avec le mouvement de ladite griffe (32, 34) et est adaptée pour actionner ledit élément de commande d'écoulement (45) en vue d'une ouverture/fermeture par action de came.

3. Porte-pièce selon la revendication 1 ou 2, **caractérisé en ce que** ladite soupape pneumatique (44) comporte un corps de soupape (50) ayant un siège (52) défini dans celui-ci qui est en communication fluidique avec ledit circuit (C), ledit élément de commande d'écoulement (45) étant supporté de manière coulissante à l'intérieur dudit corps de soupape (50) et ayant un canal (78) qui a une première extrémité en communication fluidique avec l'atmosphère et une seconde extrémité agencée de manière à communiquer avec le siège (52) avec l'élément de commande d'écoulement (45) dans sa position d'évent, et à être isolée du siège (50) avec l'élément de commande d'écoulement (45) dans sa position de fermeture.

4. Porte-pièce selon la revendication 3, **caractérisé en ce que** ledit élément de commande d'écoulement (45) supporte d'un seul tenant une plaque (62) qui est reçue de manière coulissante à l'intérieur dudit siège cylindrique (52) et est adapté pour venir en butée, avec ledit élément de commande d'écoulement (45) dans sa position de fermeture, contre une base (54) dudit siège (52) via des moyens d'étanchéité hermétiques (76), ladite seconde extrémité menant en amont desdits moyens d'étanchéité hermétiques (76) par rapport au siège (52).

5. Porte-pièce selon la revendication 4, **caractérisé en ce que** lesdits moyens élastiques primaires comportent un ressort de compression primaire (68) reçu dans ledit corps de soupape (50).

6. Porte-pièce selon l'une des revendications 2 à 5, **caractérisé en ce que** lesdits moyens de transmission comportent un coulisseau (64) qui est intercalé de manière opérationnelle entre ledit élément de commande d'écoulement (45) et ladite surface profilée (48).

7. Porte-pièce selon la revendication 6, **caractérisé en ce que** ledit coulisseau (64) est rappelé vers ladite surface profilée (48) par des moyens élastiques auxiliaires (70).

8. Porte-pièce selon l'une des revendications 1 à 5, **caractérisé en ce que** ledit élément de commande d'écoulement (145) engage directement ladite surface de came (148) avec une extrémité d'actionnement de celle-ci (145a).

9. Porte-pièce selon l'une des revendications 1 à 8, **caractérisé en ce qu'**il comporte un élément de transmission (26) qui est intercalé de manière opérationnelle entre ladite griffe (32, 34) et lesdits moyens d'actionnement (19), **caractérisé en ce que** ladite surface profilée (48) est agencée sur ledit élément de transmission (26).

10. Porte-pièce selon la revendication 9, **caractérisé en ce que** ledit élément de transmission est constitué d'une douille (26) qui est supportée de sorte qu'elle peut être déplacée en translation par le corps (12), et ladite surface profilée (48) a un profil allongé dans la direction de translation de la douille (26).

11. Porte-pièce selon l'une des revendications 1 à 8, **caractérisé en ce que** ladite surface profilée (148) est agencée sur ladite griffe (132) et a un profil allongé dans la direction de translation de la griffe (132) .

12. Porte-pièce selon la revendication 10 ou 11, **caractérisé en ce que** ladite surface profilée (48, 148) a une partie centrale rectiligne (48a, 148a) qui est délimitée entre deux pentes mutuellement opposées (48b, 48c, 148b, 148c).

13. Porte-pièce selon l'une des revendications 1 à 12, **caractérisé en ce que** lesdits moyens d'actionnement (19) comportent un actionneur de fluide dynamique.

14. Porte-pièce selon l'une des revendications 3 ou 13, **caractérisé en ce que** ledit corps de soupape (150) a un profil axialement symétrique et ledit élément de commande d'écoulement (152) est supporté dans une position excentrée par rapport audit corps de soupape (150) pour un réglage fin de sa course par rapport à la position angulaire du corps de soupape (150) autour de son propre axe.
